# EUROPÄISCHE PATENTSCHRIFT

(11) **EP 1 943 017 B1**
(45) Veröffentlichungstag und Bekanntmachung des Hinweises auf die Patenterteilung: **06.06.2012**
(21) Anmeldenummer: 06806646.3
(22) Anmeldetag: 31.10.2006
(51) Int. Cl.: B01J 29/06, B01J 29/40, B01J 37/00

(54) **VERFAHREN ZUR HERSTELLUNG PORÖSER FORMKÖRPER**
PROCESS FOR PRODUCING POROUS SHAPED BODIES
PROCEDE DE FABRICATION DE CORPS POREUX MOULES

(30) Priorität: 31.10.2005 DE 102005052016
(43) Veröffentlichungstag der Anmeldung: 16.07.2008
(73) Patentinhaber: SÜD-CHEMIE AG, 80333 München (DE)
(72) Erfinder: TISSLER, Arno, 93105 Tegernheim (DE); KURTH, Volker, 83043 Bad Aibling (DE); JAMBOR, Attila, 83209 Prien (DE)
(74) Vertreter: Stolmár, Matthias
(86) Internationale Anmeldenummer: PCT/EP2006/010486
(87) Internationale Veröffentlichungsnummer: WO 2007/051601

(56) Entgegenhaltungen:
- WO-A-2005/053842
- WO-A2-02/085513
- DE-A1- 2 719 477
- JP-A- 2005 254 122
- C. PEREGO AND P. VILLA: "Catalyst preparation methods" CATALYSIS TODAY, [Online] Bd. 34, 1997, Seiten 281-305, XP002417087 NLAMSTERDAM Gefunden im Internet: URL:http://dx.doi.org/10.1016/S0920-5861(9 6)00055-7> [gefunden am 2007-01-26]

## Beschreibung

Die Formgebung von Pulvern zu Formkörpern, die bestimmte gewünschte Eigenschaften, beispielsweise ein hohes Porenvolumen, eine hohe mechanische Stabilität etc., aufweisen, stellt insbesondere im Bereich der Herstellung von Festkatalysatoren eine große Herausforderung dar.

Dies betrifft insbesondere Formkörper aus katalytisch aktiven Pulvern, die beispielsweise schon eine so genannte "inhärente Porosität" aufweisen, wie beispielsweise Zeolithe, Tonmaterialien wie beispielsweise Pseudoboehmit etc. Eine "inhärente Porosität" - oder anders gesagt das intrinsische Porenvolumen derartiger von Natur aus Poren aufweisender Materialien - kann mittels üblichen, dem Fachmann bekannter Verfahren, z.B. Quecksilberporosimetrie gemessen werden.

Ein hohes Porenvolumen ist für eine rasche Umsetzung der Reaktionsmischung am Katalysator von Vorteil, während eine hohe mechanische Stabilität aus technischen Gründen erforderlich ist, damit während des katalytischen Verfahrens möglichst wenig Katalysatorabrieb und damit insbesondere beispielsweise ein Druckverlust verursacht wird.

Die beiden wichtigsten Eigenschaften derartiger Formkörper, die für eine erfolgreiche Katalyse notwendig sind, nämlich das optimale Porenvolumen und die optimale mechanische Stabilität sind nicht immer gleichzeitig in einem Formkörper erfüllt. Oftmals weisen Formkörper mit hohen Porenvolumen eine geringe mechanische Stabilität auf und Formkörper mit hoher mechanischer Stabilität weisen im Allgemeinen ein geringes Porenvolumen auf.

Im Allgemeinen wird daher im Stand der Technik ein Kompromiss zwischen beiden Größen bezüglich ihrer optimalen Werte eingegangen.

WO-A-02/085513 betrifft ein Verfahren zur Herstellung eines mindestens einen Zeolithen enthaltenden Formkörpers.

C. Perego et al., Catalysis Today, 34 (1997), 281-305 offenbart Katalysator-Herstellungsverfahren. Dabei können verbrennbare Materialien zur Herstellung von Katalysatorträgern verwendet werden, um die Makroporosität zu erhöhen.

Gemäß WO-A-2005/053842 enthält ein zeolithisches Material vom Pentasil-Typ Primärpartikel und optional ein Bindemittel und einen Porenbildner.

DE-A-2719477 beschreibt ein feinteiliges Polymer als oberflächenaktives Mittel.

Es ist bekannt, hohe Porenvolumina derartiger Katalysatorformkörper durch Zugabe organischer Ausbrennstoffe, wie Zellulose, Mehl, Öl etc., während des Formgebungsprozesses des Formkörpers zu erhalten (DE 102 19 879 A1). Im Allgemeinen werden diese Formkörper durch Extrusion geeigneter Mischungen von Ausgangsstoffen erhalten. Durch Kalzination der Extrudate werden diese organischen Zuschlagsstoffe entfernt und hinterlassen nach dem Ausbrennen Freiräume bzw. Poren, die die mechanische Stabilität.der Formkörper vermindern.

Allerdings weisen derartige organische Zuschlagsstoffe den Nachteil auf, dass sie nicht immer rückstandsfrei verbrennen, insbesondere bei Verwendung von amorphen Kohlenstoff, so dass daher die kalzinierten Formkörper oftmals aufwendig nachbehandelt werden müssen, um die Rückstände der organischen Zuschlagsstoffe nach dem Kalzinieren zu entfernen.

Die Aufgabe der vorliegenden Erfindung bestand daher in der Bereitstellung eines Verfahrens zur Herstellung poröser Formkörper, die ein hohes Porenvolumen mit einer hohen mechanischen Stabilität vereinen. Eine weitere Aufgabe bestand darin, eine Nachbehandlung der durch das erfindungsgemäße Verfahren erhaltenen porösen Formkörper zu vermeiden.

Erfindungsgemäß wird diese Aufgabe gelöst durch ein Verfahren zur Herstellung eines porösen Formkörpers mit einer Verteilung der Porendurchmesser wie folgt

| Porendurchmesser | %-Anteil |
|---|---|
| 7,5-14 nm | 5-15 |
| 14-80 nm | 8-35 |
| 80 - 1750 nm | 55 - 85 |
| 1.750 - 15.000 nm | 0,1 - 2 |

umfassend die Schritte des
a) Bereitstellens eines Pulvers bestehend im Wesentlichen aus Partikeln mit definierter innerer Porosität
b) innigen Vermischens des Pulvers mit einem unelastischen Porenbildner, der aus kugelförmigen Harzpartikeln mit einem mittleren Durchmesser von 0,5 bis 2 um besteht
c) Formgebens der Mischung aus Schritt b) zu einem Formkörper
d) Kalzinierens des im Schritt c) erhaltenen Formkörpers.

Durch den Zusatz eines unelastischen Porenbildners ist es möglich, beispielsweise den Druck beim Formgebungsprozess, der vorzugsweise in einem Extruder durchgeführt wird, so zu erhöhen, dass eventuell in der zu extrudierenden Mischung enthaltenes Wasser bzw. Lösungsmittel zwar aus der Form gepresst werden kann, die Transportporen bzw. die größeren Poren jedoch nicht durch den angelegten Druck geschlossen werden, da die unelastischen Porenbildner dem im Extruder herrschenden Druck widerstehen.

Der Begriff "unelastischer Porenbildner" soll also erfindungsgemäß dahingehend verstanden werden, dass er einem äußeren Druck widerstehen kann, ohne aus der Form gepresst zu werden. Der Ausdruck "definierte innere Porosität" bedeutet, dass die per se vorhandene innere Porosität derartiger Partikel (Ausgangsstoffe) genau bestimmt werden kann und nicht Null beträgt, aber auch kleiner als 0,5 cm³/g, bevorzugt 0,4 cm³/g ist, und noch bevorzugter 0,2 cm³/g ist.

Nach dem Formgeben wird der unelastische Porenbildner durch Kalzination entfernt und es entsteht somit ein poröser Formkörper mit einem hohen Porenvolumen von mehr als 0,5 cm³/g. Gleichzeitig weist der durch das erfindungsgemäße Verfahren hergestellte poröse Formkörper auch eine mechanische Stabilität von > 1,7 kg je cm auf, da vorteilhafterweise ein hoher Druck im Extruder erzielt werden kann, jedoch ebenfalls Poren durch den Einsatz und nachfolgender Kalzination von unelastischen Porenbildnern entstehen.

Bevorzugt wird vor Schritt b) des erfindungsgemäßen Verfahrens eine wässrige Aufschlämmung des Pulvers aus Schritt a) hergestellt, was die anschließende Weiterverarbeitung deutiche erleichtert.

Erfindungsgemäß verbrennt der unelastische Porenbildner während der Kalzination überraschenderweise rückstandsfrei. Damit werden aufwendige Nachbehandlungsschritte des durch das erfindungsgemäße Verfahren erhaltenen porösen Formkörpers vermieden. Dies führt weiterhin dazu, dass der so erhaltene Formkörper während des Einsatzes in einem katalytischen Prozess weniger verkokt als herkömmliche Formkörper, die durch den Einsatz organischer Porenbildner erhalten werden, so dass die Standzeit in den katalytischen Zyklen bis zur Regenerierung des erfindungsgemäßen katalytischen Formkörpers höher ist, und geringere Regenerierungszyklen in größeren Zeitabständen erforderlich sind verglichen mit herkömmlich hergestellten Formkörpern.

Bevorzugt besteht der unelastische Porenbildner aus im Wesentlichen kugelförmigen oder sphärischen Harz- bzw. Polymerpartikeln wie beispielsweise Polystyrolen bzw. -harzen, Polyurethanen, Polypropylen bzw. -harzen Polyethylen, Polypropylen-Polyethylen-Copolymeren bzw. -harzen etc. Harzpartikel die einen mittleren Durchmesser von 0,5 bis 2 µm aufweisen, besonders bevorzugt von 0,7 bis 1,5 µm kommen zur Auwendung, in diesem Zusammenhang wird der Begriff "Harz" so verstanden, dass es sich dabei um weitgehend amorphe polymere Produkte ohne scharfen Erweichungs- oder Schmelzpunkt handelt.

In einer besonders bevorzugten weiteren Ausführungsform bilden die kugelförmigen Harzpartikel im Wesentlichen sphärisch geformte Agglomerate mit einem Partikeldurchmesser derartiger Agglomerate von 10 bis 100 µm. Die kugelförmigen bzw. sphärischen Harzpartikel bilden in diesem Agglomerat mehr oder minder regelmäßige Unterstrukturen aus. Der Begriff "sphärisch" wird vorliegend topologisch verstanden und umfasst dabei Körper, die mittels Kugelkoordinaten im Raum definiert werden können, also z.B. auch würfelförmige Objekte, verzerrte Kugeln, eiförmige Körper etc.

Der unelastische Porenbildner wird vorzugsweise mittels eines Binders zu einer bevorzugt wässrigen Aufschlämmung des Pulvers gemäß Schritt b) des erfindungsgemäßen Verfahrens zugegeben und innig gemischt.

Die Menge unelastischen Porenbildners beträgt auf den Feststoffgehalt der wässrigen Aufschlämmung bezogen zwischen 1 und 30 Gew%, bevorzugt zwischen 5 und 20 Gew%, besonders bevorzugt zwischen 10 und 15 Gew%. Die Menge des ggf. ebenfalls zuzugebenden Bindemittels beträgt bezogen auf den Feststoffgehalt der wässrigen Aufschlämmung zwischen 50 und 80 Gew%, bevorzugt zwischen 10 und 70 Gew%, besonders bevorzugt zwischen 15 und 60 Gew%., um eine hohe Abbindefähigkeit des erfindungsgemäß erhaltenen Formkörpers zu erzielen. Weiterhin können zum Binder noch Acrylharze wie Acrylate, Acrylamide, Acrylnitrile etc. zur Erhöhung der Festigkeit des Formkörpers in einer Menge von 0,1 bis 30 Gew% bezogen auf den Feststoffgehalt der wässrigen Aufschlämmung zugegeben werden.

Die Formgebung der so erhaltenen erfindungsgemäßen Mischung erfolgt vorzugsweise durch Extrusion, da der Druck im Extruder besonders gut eingestellt werden kann, so dass mechanisch besonders stabile und belastbare Formkörper erhalten werden.

Die Kalzinierungstemperatur beim Kalzinieren des Formkörpers im Rahmen des erfindungsgemäßen Verfahrens beträgt im Allgemeinen zwischen 400 bis 600°C. Unterhalb von 400 bis teilweise - je nach Porenbildner - sogar ca. 450°C werden der Binder bzw. weitere Zuschlagsstoffe sowie der unelastische Porenbildner im Allgemeinen nicht vollständig ausgebrannt bzw. umgewandelt, oberhalb von ca. 600°C besteht die Gefahr, dass das poröse Material, d.h. bevorzugt ein Molekularsieb wie beispielsweise ein Zeolith, Aluminiumphosphat etc. durch thermische Beanspruchung geschädigt wird. Damit sinkt deren Katalyseleistung im Formkörper ab. Es wird jedoch festgehalten, dass kurzfristig eine Temperatur von mehr als 600°C erfindungsgemäß durchaus auch eingesetzt werden kann, um gegebenenfalls letzte Rückstände noch vollständig auszubrennen. Jedoch sollten Temperaturen im Temperaturbereich zwischen 600 bis 700°C nicht allzu lange auf dem erfindungsgemäß erhaltenen Formkörper einwirken, um thermisch induzierte Schädigungen des Formkörpers, und damit eine verschlechterte katalytische Aktivität von vorneherein auszuschließen.

Bevorzugt wird in einem ersten Schritt das Pulver mit definierter Porosität mit einem Sol-Gel-Kolloid, beispielsweise Siliziumdioxid vermischt. Ganz besonders bevorzugt ist, dass das Sol-Gel im Wesentlichen alkalifrei ist, d.h. weniger als 0.1 Gew% Alkaliverbindungen enthält. Zwar können auch alkalihaltige Sol-Gele verwendet werden, jedoch ist in diesem Fall eine zusätzliche Nachbehandlung des kalzinierten Formkörpers z.B. mit HNO₃ erforderlich, um einen Alkaliaustausch im erfindungsgemäßen Formkörper durchzuführen. Wichtig ist bei Zugabe des Sol-Gels weiterhin die Größe der Primärpartikel, die im allgemeinen in einem Bereich von 10-20 nm liegen sollten.

Die Aufgabe der vorliegenden Erfindung wird weiter durch einen katalytisch aktiven Formkörper, hergestellt durch das erfindungsgemäße Verfahren, mit einer Verteilung der Porendurchmesser wie folgt

| Porendurchmesser | %-Anteil |
|---|---|
| 7,5 - 14 nm | 5 - 15 |
| 14 - 80 nm | 8 - 35 |
| 80 - 1750 nm | 55 - 85 |
| 1.750 - 15.000 nm | 0,1 - 2 |

gelöst. Dieser Formkörper weist eine Porosität von > 0,15 cm³/g auf, bevorzugt > 0,35 cm³/g, besonders bevorzugt > 0,45 cm³/g, sowie eine hohe mechanische Stabilität von > 1,7 kg/cm².

Der erfindungsgemäße Formkörper weist bezogen auf das Gesamtvolumen für Poren mit einem Durchmesser von 7,5 nm bis 15.000 nm die in der unten stehenden Tabelle 1 angegebene prozentuale Verteilung der Anteile von Poren mit unterschiedlichem Porendurchmesser auf. Diese Verteilung garantiert zum einen eine optimale Porosität zur Durchführung der katalytischen Reaktion, zum anderen ermöglicht sie auch die geforderte Festigkeit der Formkörper:

**Tabelle 1: Typische Porengrößenverteilung in einem erfindungsgemäß hergestellten Formkörper**

| **Porendurchmesser** | **%-Anteil** |
|---|---|
| 7,5 - 14 nm | 5 -15 |
| 14 - 80 nm | 8 - 35 |
| 80 - 1.750 nm | 55 - 85 |
| 1.750 - 15.000 nm | 0,1 - 2 |

Besonders bevorzugte Anteile für Poren mit einem Porendurchmesser von 7,5 - 14 nm sind 7 - 12 %, ganz besonders bevorzugt von 7,5 - 10 %, für Poren mit 14 - 80 nm Porendurchmesser 12 - 29 %, ganz besonders bevorzugt von 15 - 25 %, für Poren mit einem Porendurchmesser von 80 - 1.750 nm 60 - 80 %, ganz besonders bevorzugt von 65 - 75% und für Poren mit einem Porendurchmesser von 1.750 - 15.000 nm 0,3 - 1,5 %, ganz besonders bevorzugt von 0,5 - 1 %.

Im Nachfolgenden wird das erfindungsgemäße Verfahren anhand eines nicht als einschränkend verstandenen Ausführungsbeispiels erläutert.

### Ausführungsbeispiel

Als katalytisch aktives Pulver mit innerer definierter Porosität wurde der Zeolith, NH₄-MFI 500, verwendet. 2,5 kg des Zeoliths wurden mit 1,6 1 entmineralisiertem Wasser zu einer Aufschlämmung vermischt und kolloides Siliziumdioxid (Ludox HS40) 1,563 kg zugegeben. Weiterhin wurden 50 g Methylzellulose (Methocel F4M) zugegeben sowie als unelastischer Porenbildner 500g eines Polystyrolharzes (Almatex Muticle PP 600 mit einem Teilchendurchmesser von 0,8 µm). Außerdem wurden 50 g eines Acrylnitrilharzes (Dualite E135 - 040D) zugegeben. Die Mischung wurde intensiv vermischt und in einem Extruder (Fuji, Pandal Co, Ltd., Japan) zu katalytisch aktiven Formkörpern extrudiert und anschließend an Luft bei einer Temperatur von 120°C für drei Stunden getrocknet. Anschließend wurden die Formkörper kalziniert, indem die Temperatur mit einer Heizrate von 60°C/Stunde auf 550°C erhöht und diese Temperatur für fünf Stunden gehalten wurde. Schließlich wurde wieder auf Raumtemperatur abgekühlt.

Falls nicht alkalifrei gearbeitet wird, können die Extrudate optional zur Absenkung des Alkalimetallgehalts wie folgt mit Salpetersäure nachbehandelt werden:
18.188 g demineralisiertes Wasser wurden mit Salpetersäure (52,5%ig) versetzt, bis ein pH von 2 erreicht wurde. Die verdünnte Säure wurde auf 80°C erhitzt, die Extrudate (2.500 g) hinzugegeben und für 5 Stunden bei 80°C gehalten. Der pH-Wert der Säure wurde laufend kontrolliert und bei einem Überschreiten von pH 2 wurde frische Salpetersäure hinzugefügt, bis pH 2 erreicht wird. Verbrauch: 29 g HNO₃ (52,5%ig). Nach 5 Stunden wurden die Extrudate mehrfach mit 7.500 g demineralisiertem H₂O bis zu einer Leitfähigkeit des Waschwassers < 100 µS gewaschen. Anschließend wurden die Extrudate erneut für 5 Stunden in auf 80°C erwärmte verdünnte Salpetersäure mit pH = 2 gegeben und der pH der Säure durch Zugabe von frischer Salpetersäure bei pH = 2 gehalten. Verbrauch: 19,8 g HNO₃ (52,5%ig) . Die Extrudate wurden mehrfach mit 7.500 g demineralisiertem H₂O bis zu einer Leitfähigkeit des Waschwassers < 100 µS gewaschen. Trocknung und Kalzinierung erfolgten wie oben (120°C → 60°C/h → 550°C für 5 Stunden → Abkühlen).

Die Analyse des Formkörpers ergab die in der nachstehenden Tabelle angegebenen Resultate. Die Bestimmung des Porenvolumens (Porosität) (PV) erfolgte mittels Quecksilberporosimetrie nach DIN 66133 bei einem maximalen Druck von 2.000 bar.

**Tabelle 2: Physikalische Eigenschaften des Formkörpers gemäß Ausführungsbeispiel:**

| **Formkörper gemäß Ausführungsbeispiel** | | | |
|---|---|---|---|
| | | | |
| Format | | | 1/16" Extrudat |
| | | | |
| Bindemittel | | | Silica |
| | | | |
| Bindemittel- | | (Gew%) | 20 |
| | | | |
| gehalt LOI | a) | (Gew%) | 1,4 |
| | | | |
| Na | b | (Gewppm) | <4 0 |
| C | b) | (Gewppm) | 70 +/- 20 |
| | | | |
| Härte | | (kg/cm²) | 1, 9 |
| | | | |
| PV-Hg | | (cm³/g) | 0,54 |
| | | | |
| Porengrößenverteilung: | | | |
| >1750 nm | | (%) | 0,71 |
| 1750-80 nm | | (%) | 68,96 |
| 80 - 14 nm | | (%) | 21,5 |
| 14-7, 5nm | | (%) | 8,83 |
| | | | |
| APR | | (nm) | |
| | | | |
| SA | g) | (m²/g) | 295 |

| | | | |
|---|---|---|---|
| a)1000°C/3 h b)Wie in der Probe g) BET-Oberfläche nach DIN 66131, 5-Punkt-Verfahren: p/po = 0,004 - 0,14; Konditionierung: 350°C/3h im Vakuum. LOI = Loss-on-ignition (Gewichtsverlust beim Kalzinieren) | | | |

## Patentansprüche

1. Verfahren zur Herstellung eines katalytisch aktiven porösen Formkörpers mit einer Verteilung der Porendurchmesser wie folgt:
| **Porendurchmesser** | **%-Anteil** |
|---|---|
| 7,5 - 14 nm | 5 -15 |
| 14 - 80 nm | 8 - 35 |
| 80 - 1.750 nm | 55 - 85 |
| 1.750 - 15.000 nm | 0,1 - 2 |
umfassend die Schritte des
a) Bereitstellens eines katalytisch aktiven Pulvers bestehend aus Partikeln mit definierter innerer Porosität
b) innigen Vermischens des Pulvers mit einem unelastischen Porenbildner, der aus kugelförmigen Harzpartikeln mit einem mittleren Durchmesser von 0,5 bis 2 µm besteht
c) Formgebens der Mischung aus Schritt b) zu einem Formkörper
d) Kalzinierens des in Schritt c) erhaltenen Formkörpers.

2. Verfahren nach Anspruch 1, wobei ein Polymer oder Copolymer aus Polypropylen, Polyethylen, Polyurethan, Polystyrol und/oder deren Mischungen als unelastischer Porenbildner eingesetzt wird.

3. Verfahren nach Anspruch 2, **dadurch gekennzeichnet, dass** vor Schritt b) eine wässrige Aufschlämmung des Pulvers aus Schritt a) hergestellt wird.

4. Verfahren nach Anspruch 3, **dadurch gekennzeichnet, dass** der unelastische Porenbildner in einer Menge zugegeben wird, die 1 bis 30 Gew.-% bezogen auf den Feststoffgehalt der wässrigen Aufschlämmung beträgt.

5. Verfahren nach einem der vorherigen Ansprüche, **dadurch gekennzeichnet, dass** das Formgeben durch Extrusion erfolgt.

6. Verfahren nach einem der vorherigen Ansprüche, **dadurch gekennzeichnet, dass** die Kalzinierung in Schritt d) bei einer Temperatur zwischen 450°C bis 600°C, besonders bevorzugt zwischen 500 bis 600°C erfolgt.

7. Verfahren nach einem der vorherigen Ansprüche, **dadurch gekennzeichnet, dass** vor, während oder nach Schritt b) weiter ein Bindemittel zugegeben wird.

8. Verfahren nach Anspruch 7, **dadurch gekennzeichnet, dass** das Bindemittel in einer Menge zugegeben wird, die 5 - 80 Gew.-% bezogen auf den Feststoffgehalt der wässrigen Aufschlämmung beträgt.

9. Verfahren nach Anspruch 8, **dadurch gekennzeichnet, dass** das Bindemittel weniger als 0,1 Gew.-% Alkaliverbindungen enthält.

10. Formkörper erhältlich durch das Verfahren nach einem der vorherigen Ansprüche, mit einer Verteilung der Porendurchmesser wie folgt:
| **Porendurchmesser** | **%-Anteil** |
|---|---|
| 7,5 - 14 nm | 5 -15 |
| 14 - 80 nm | 8 - 35 |
| 80 - 1.750 nm | 55 - 85 |
| 1.750 - 15.000 nm | 0,1 - 2 |

11. Formkörper nach Anspruch 10 **dadurch gekennzeichnet, dass** der Formkörper ein Porenvolumen von > 0,5 cm³/g aufweist.

12. Formkörper nach Anspruch 10 oder 11, **dadurch gekennzeichnet, dass** der Formkörper eine mechanische Stabilität von > 1,7 kg/cm² aufweist.

## Claims

1. Method for producing a catalytically active porous shaped body with a distribution of the pore diameters as follows:
| **Pore diameter** | **% proportion** |
|---|---|
| 7.5-14 nm | 5 - 15 |
| 14 - 80 nm | 8 - 35 |
| 80 - 1,750 nm | 55 - 85 |
| 1,750 - 15,000 nm | 0.1 - 2 |
comprising the steps of
a) providing a catalytically active powder consisting of particles with defined internal porosity
b) intimately mixing the powder with an inelastic pore former which consists of spherical resin particles with an average diameter of from 0.5 to 2 µm
c) shaping the mixture from step b) to a shaped body
d) calcining the shaped body obtained in step c).

2. Method according to claim 1, wherein a polymer or copolymer composed of polypropylene, polyethylene, polyurethane, polystyrene and/or mixtures thereof is used as inelastic pore former.

3. Method according to claim 2, **characterized in that**, before step b), an aqueous slurry of the powder from step a) is produced.

4. Method according to claim 3, **characterized in that** the inelastic pore former is added in a quantity which is 1 to 30% by weight relative to the solids content of the aqueous slurry.

5. Method according to one of the previous claims, **characterized in that** the shaping takes place by extrusion.

6. Method according to one of the previous claims, **characterized in that** the calcining in step d) takes place at a temperature between 450°C and 600°C, particularly preferably between 500 and 600°C.

7. Method according to one of the previous claims, **characterized in that** a binder is also added before, during or after step b).

8. Method according to claim 7, **characterized in that** the binder is added in a quantity which is 5 - 80% by weight relative to the solids content of the aqueous slurry.

9. Method according to claim 8, **characterized in that** the binder contains less than 0.1% by weight of alkali compounds.

10. Shaped body obtainable by the method according to one of the previous claims, with a distribution of the pore diameters as follows:
| **Pore diameter** | **% proportion** |
|---|---|
| 7.5 - 14 nm | 5 - 15 |
| 14 - 80 nm | 8 - 35 |
| 80 - 1,750 nm | 55 - 85 |
| 1,750 - 15,000 nm | 0.1 - 2 |

11. Shaped body according to claim 10, **characterized in that** the shaped body has a pore volume of > 0.5 cm³/g.

12. Shaped body according to claim 10 or 11, **characterized in that** the shaped body has a mechanical stability of > 1.7 kg/cm².

## Revendications

1. Procédé de fabrication d'un corps moulé poreux actif du point de vue catalytique avec une distribution des diamètres de pores comme suit :
| **Diamètre de pores** | **Pourcentage** |
|---|---|
| 7,5 à 14 nm | 5 à 15 |
| 14 à 80 nm | 8 à 35 |
| 80 à 1750 nm | 55 à 85 |
| 1750 à 15 000 nm | 0,1 à 2 |
comprenant les étapes de
a) fourniture d'une poudre active du point de vue catalytique constituée de particules avec une porosité interne définie
b) mélange interne de la poudre avec un formateur de pores non élastique qui se compose de particules de résine sphériques avec un diamètre moyen de 0,5 à 2 µm
c) modelage du mélange provenant de l'étape b) en un corps moulé
d) calcination du corps moulé obtenu à l'étape c).

2. Procédé selon la revendication 1, dans lequel un polymère ou copolymère constitué de polypropylène, polyéthylène, polyuréthane, polystyrène et/ou de leurs mélanges est utilisé comme formateur de pores non élastique.

3. Procédé selon la revendication 2, **caractérisé en ce qu'**une barbotine aqueuse de la poudre provenant de l'étape a) est fabriquée avant l'étape b).

4. Procédé selon la revendication 3, **caractérisé en ce que** le formateur de pores non élastique est ajouté en une quantité qui va de 1 à 30 % en poids par rapport à la teneur en solides de la barbotine aqueuse.

5. Procédé selon l'une quelconque des revendications précédentes, **caractérisé en ce que** le modelage s'effectue par extrusion.

6. Procédé selon l'une quelconque des revendications précédentes, **caractérisé en ce que** la calcination à l'étape d) s'effectue à une température comprise entre 450°C et 600°C, de manière particulièrement préférée entre 500 et 600°C.

7. Procédé selon l'une quelconque des revendications précédentes, **caractérisé en ce qu'**un liant est en outre ajouté avant, pendant ou après l'étape b).

8. Procédé selon la revendication 7, **caractérisé en ce que** le liant est ajouté en une quantité qui va de 5 à 80 % en poids par rapport à la teneur en solides de la barbotine aqueuse.

9. Procédé selon la revendication 8, **caractérisé en ce que** le liant contient moins de 0,1 % en poids de composés alcalins.

10. Corps moulé pouvant être obtenu par le procédé selon l'une quelconque des revendications précédentes, avec une distribution des diamètres de pores comme suit :
| **Diamètre de pores** | **Pourcentage** |
|---|---|
| 7,5 à 14 nm | 5 à 15 |
| 14 à 80 nm | 8 à 35 |
| 80 à 1750 nm | 55 à 85 |
| 1750 à 15 000 nm | 0,1 à 2 |

11. Corps moulé selon la revendication 10, **caractérisé en ce que** le corps moulé présente un volume de pores > 0,5 cm³/g.

12. Corps moulé selon la revendication 10 ou 11, **caractérisé en ce que** le corps moulé présente une stabilité mécanique > 1,7 kg/cm².
